# EUROPÄISCHE PATENTSCHRIFT

(11) **EP 1 319 787 B1**
(45) Veröffentlichungstag und Bekanntmachung des Hinweises auf die Patenterteilung: **17.08.2005**
(21) Anmeldenummer: 02026882.7
(22) Anmeldetag: 02.12.2002
(51) Int. Cl.: E05F 5/02, E05F 5/08, E05F 5/10

(54) **Luftdämpfer für bewegliche Möbelteile**
Air damper for a movable furniture part
Amortisseur pour éléments de meubles mobiles

(30) Priorität: 12.12.2001 DE 20120112 U
(43) Veröffentlichungstag der Anmeldung: 18.06.2003
(73) Patentinhaber: Arturo Salice S.p.A., I-22060 Novedrate (Como) (IT)
(72) Erfinder:
(74) Vertreter: Laufhütte, Dieter, Dr.-Ing.

(56) Entgegenhaltungen:
- EP-A- 1 120 524
- DE-U- 8 711 990
- FR-A- 2 267 439
- GB-A- 611 315
- US-A- 2 074 008
- US-A- 5 507 070

## Beschreibung

Die Erfindung betrifft einen Luftdämpfer für bewegliche Möbelteile, wie beispielsweise Schubladen oder Türen, bestehend aus einem einseitig offenen Zylinder und einem in diesem längsverschieblich aufgenommenen Kolben mit Dichtung, an dem ein Stößel anschließt.

Grundsätzlich sind Dämpfer für bewegliche Möbelteile in unterschiedlichen Ausgestaltungen bereits bekannt. So ist beispielsweise aus der europäischen Patentanmeldung mit der Anmeldenummer 01 111 420.4 eine Bremsvorrichtung für Möbelteile bekannt, wobei diese, d.h. der Dämpfer, mit einer hochviskosen Flüssigkeit gefüllt ist.

Es ist im Stand der Technik bereits bekannt, anstelle der mit hochviskoser Flüssigkeit gefüllten Dämpfungsvorrichtungen Luftdämpfer einzusetzen. Hier sind beispielsweise die JP 0060272446 AA, sowie die EP 0 430 797 A1 aber auch die EP 0 841 452 A2 sowie die DE 44 09 716 A1 und die DE 37 29 597 A1 aufzuführen.

Die bekannten Vorrichtungen erfordern aber entweder eine aufwendige Herstellung oder einen hohen Grad an Präzision. Ein Teil dieser Luftdämpfer weist einstellbare Ventile zur Einstellung des Kompressionsdrucks auf, während die anderen Luftdämpfer aufwendige Nuten oder Kanäle an der Wand des Kolbens oder des Zylinders aufweisen, die zu einer schnellen Beschädigung der Kolbendichtung führen können.

Aufgabe der vorliegenden Erfindung ist es, einen Luftdämpfer für bewegliche Möbelteile, insbesondere Schubladen oder Türen, zu schaffen, dessen Bauart besonders einfach gehalten und der kostengünstig herstellbar ist.

Erfindungsgemäß wird zur Lösung der Aufgabe ein gattungsgemäßer Luftdämpfer entsprechend den Merkmalen des Anspruchs 1 aufgebaut. Entsprechend dem Kennzeichen ist bei einem gattungsgemäßen Luftdämpfer eine in der Mantelwandung des Zylinders nahe dem geschlossenen Endbereich des Zylinders angeordnete Bohrung vorgesehen, deren Durchmesser gegenüber dem Zylinderdurchmesser wesentlich kleiner ist. Untersuchungen haben ergeben, dass mit dieser erfindungsgemäßen Ausgestaltung eine sehr gute Bremswirkung erreicht wird, wobei es für die Erfindung wesentlich ist, dass die Bohrung im Mantel und nicht im Boden des Zylinders angeordnet ist. Ein entsprechendes Vorsehen der Bohrungen im Boden des Zylinders führt zu einer wesentlich schlechteren Bremswirkung.

Besonders vorteilhaft weist die Bohrung ca. 2,5 % bis 4 %, vorzugsweise 3,3 % des Zylinderdurchmessers auf. Für diese Größenverhältnisse ergibt sich ein besonders gutes Dämpfungsverhalten.

Bevorzugt kann der Kolben des Luftdämpfers nach Einschieben in den Zylinder durch eine Rückstelleinrichtung in seine ausgeschobene Stellung zurückstellbar sein. Als Rückstelleinrichtung bieten sich eine Feder oder ein entsprechender Magnet an. In Anlehnung an das deutsche Gebrauchsmuster DE 201 17 031 kann der Zylinder ein mindestens zweistufiger Teleskopzylinder sein.

Besonders vorteilhaft kann am freien Ende des Stößels ein Puffer angeordnet sein. Der Stößel kann besonders vorteilhaft aus zwei sich kreuzenden Stangen bestehen. In einer der Stangen des Stößels kann ein Langloch ausgebildet sein, durch welches ein ortsfest im Zylinder angeordneter Stift greift. Durch entsprechendes Anschlagen des Stiftes an den Enden des Langlochs wird die Relativbewegung des Stößels zu dem Zylinder begrenzt.

Gemäß einer besonders vorteilhaften Ausgestaltung der Erfindung kann der bewegliche Zylinder des Teleskopzylinders auf Umfang mindestens zwei radial vorspringende Stege aufweisen, die seine Führung im feststehenden Zylinder entlang mindestens eines zylinderfesten Stiftes ermöglichen. Gemäß einer Abwandlung können hier vier radial vorspringende Stege vorgesehen sein, die entlang zwei sich gegenüberliegenden zylinderfesten Stiften geführt sind. Diese zylinderfesten Stifte können in entsprechende Bohrungen des Zylinders eingelassen sein.

Gemäß einer weiteren bevorzugten Ausgestaltung der Erfindung kann der Kolben eine zu seinem Ende hin konisch auslaufende Nut aufweisen, in der eine O-Ringdichtung lose gelagert ist, so dass sie in Einschubrichtung des Kolbens dichtend anliegt und in Ausschubrichtung lose gelagert ist.

Eine weitere bevorzugte Ausführung der Erfindung besteht darin, dass die Mantelwand des Zylinders mindestens zwei Abschnitte unterschiedlichen Innendurchmessers aufweist, dass der sich an den Kolben anschließende Stößel mindestens einen Abschnitt aufweist, dessen Durchmesser an den Innendurchmesser des Abschnitts des Zylinders angepasst ist, wobei der Stößel eine zweite Dichtung zur Abdichtung gegenüber der Mantelwand des Zylinders aufweist. Durch diese entsprechende zweite Dichtung wird die Wirkung der ersten, im Bereich des Kolbens angeordneten Dichtung wesentlich verbessert, sodass die komprimierte Luft zwangsläufig nur durch die Bohrung im Endbereich des Zylinders entweichen kann.

Weitere bevorzugte Ausgestaltungen der Ausführungsvariante mit einer Zylindermantelwand, die unterschiedliche Abschnitte mit verschiedenen Durchmessern aufweist, ergeben sich aus den sich an den Unteranspruch 11 anschließenden Unteransprüchen 12 bis 15.

Weitere Einzelheiten und Vorteile der Erfindung werden anhand der in der Zeichnung dargestellten Ausführungsbeispiele näher erläutert. Es zeigen:
- die Figuren 1 bis 5:: teilweise geschnittene Darstellungen, die den erfindungsgemäßen Luftzylinder in einem in eine Schubladenführung integrierten Anwendungsfall darstellen,
- die Figur 6:: eine teilweise geschnittene Seitendarstellung eines Luftzylinders gemäß einer Ausführungsform der vorliegenden Erfindung,
- Figur 7:: einen Luftzylinder gemäß der Darstellung nach Figur 6 im ausgezogenen Zustand,
- Figur 8:: einen Luftzylinder, seitlich geschnitten gemäß einer alternativen Ausführungsvariante,
- Figur 9:: einen Luftzylinder seitlich geschnitten gemäß einer weiteren Ausführungsform der Erfindung,
- Figur 10:: eine geschnittene Darstellung des Luftzylinders gemäß Figur 9 im zusammengedrückten Zustand,
- Figur 11:: eine Querschnittsdarstellung entlang der Schnittlinie XI - XI gemäß Figur 10,
- Figur 12:: den Stößel mit Kolben gemäß einer Ausführungsform der Erfindung,
- Figur 13:: den beweglichen Zwischenzylinder in seitlicher Darstellung,
- Figur 14:: eine seitliche Darstellung eines Zylinders des erfindungsgemäßen Luftdämpfers,
- Figur 15 - 17:: einen seitlich geschnittenen Luftzylinder gemäß einer anderen Ausführungsform der Erfindung in unterschiedlichen Positionen,
- Figur 18:: eine weitere Ausführungsform eines erfindungsgemäßen Luftzylinders, ebenfalls seitlich geschnitten und
- die Figuren 19 -21:: eine weitere Ausführungsvariante eines erfindungsgemäßen Luftzylinders, seitlich geschnitten, in unterschiedlichen Positionen.

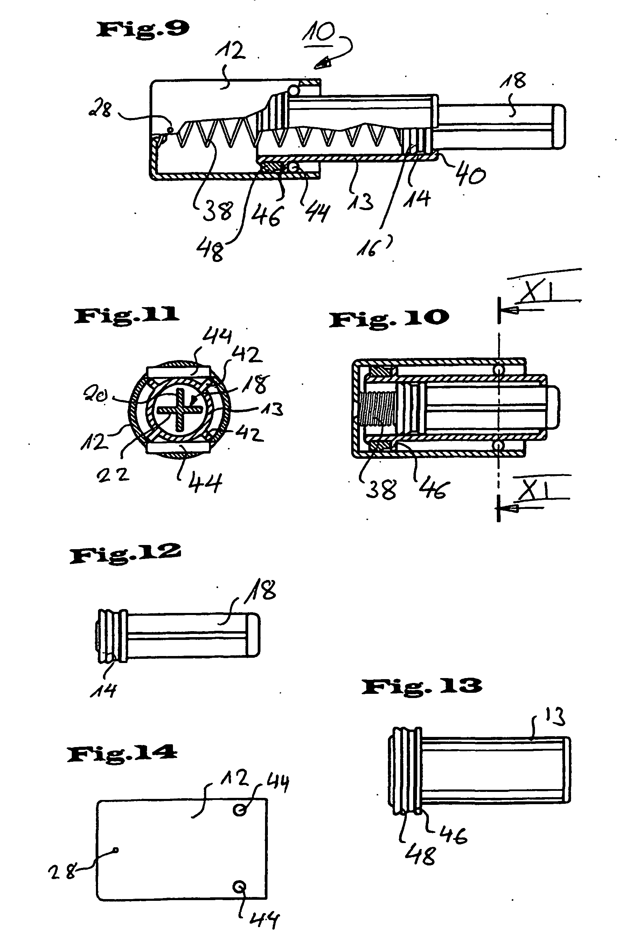

Der grundsätzliche Aufbau des erfindungsgemäßen Luftdämpfers lässt sich anhand des Beispiels gemäß der Figuren 6 und 7 darstellen. In dieser ersten Ausführungsvariante der Figuren 6 und 7 besteht der Luftdämpfer 10 aus einem einseitig geschlossenen Zylinder 12, in welchem ein Kolben 14 längs beweglich gelagert ist. Der Kolben 14 weist eine Dichtung 16 auf. Mit dem Kolben 14 ist einstückig ein Stößel 18 verbunden, der aus zwei sich kreuzenden Stegen 20 bzw. 22 besteht. In dem Steg 20 ist ein Langloch 24 ausgenommen, in welchem ein zylinderfester Stift 26 eingreift. Der zylinderfeste Stift 26 begrenzt zusammen mit dem Langloch 24 die eingedrückte bzw. die ausgezogene Stellung des Kolben 14, wobei die eingedrückte Stellung in Figur 6 und die ausgezogene Stellung in Figur 7 gezeigt ist. Für die Dämpfung von besonderer Bedeutung ist die Bohrung 28 im Mantel des Zylinders 12, nahe dessen geschlossenen Ende. Der Durchmesser der Bohrung 28 beträgt vorzugsweise 3,3 % des Innendurchmessers des Zylinders 12. In der Ausfühnrngsvariante gemäß der Figuren 6 und 7 weist der Kolben 14 eine Nut 30 auf, die konisch zum Ende des Kolbens 14 hin verläuft. In der Nut 30 ist die als O-Ring ausgebildete Dichtung 16 gelagert, wobei diese in ihrem Durchmesser derart ausgelegt ist, dass sie sich beim Eindrücken des Kolbens gegenüber einem flanschartigen Anschlag 32 abstützt und dabei auf der konusförmigen Nut soweit gedehnt wird, dass sich der O-Ring während des Einschiebens des Kolbens dichtend an der Zylinderinnenwandung anschmiegt. Demgegenüber rutscht der O-Ring beim Herausziehen des Kolbens entlang der konusförmigen Nut in die entgegengesetzte Richtung und legt sich am flanschartigen Ende 34 des Kolbens 14 an. Hierdurch lässt sich der Kolben 14 völlig frei nach außen ziehen, wobei dies durch einen hier nicht näher dargestellten am äußeren Ende des Stößels 18 angeordneten Magneten erfolgen kann.

Die Wirkung dieser Ausgestaltung des Luftdämpfers nach den Figuren 6 und 7 beruht darauf, dass durch die Bohrung 28 aufgrund ihres sehr kleinen Durchmessers nur jeweils eine geringe Menge von komprimierter Luft pro Zeiteinheit entweichen kann, so dass hier eine gute Dämpfungswirkung erzielt wird. In Gegenrichtung, d.h. beim Ausziehen des Kolbens 20 kann die Luft sowohl durch die Bohrung, als auch durch die lose Verbindung zwischen der konischen Nut 30 und dem O-Ring 16 leichter fließen.

In Figur 8 ist eine andere Ausführungsform des Luftdämpfers 10 gezeigt. Hier ist der Zylinder 12 in gleicher Weise aufgebaut. Auch der Stößel 18 entspricht dem Aufbau gemäß der Ausführungsvariante nach den Figuren 6 und 7. Lediglich der Kolben 14 weist eine anders geformte Dichtung 16' auf. Am äußeren Ende des Stößels 18 ist ein Puffer 36 gelagert. Zwischen dem Boden des Zylinders 12 und dem Stößel 18 ist eine Druckfeder 38 angeordnet, die die für die Rückstellung des Kolbens 14 notwendige Rückstellkraft bereitstellt.

In den Figuren 9 bis 14 ist eine teleskopartige Ausführung des Luftdämpfers 10 gezeigt, die grundsätzlich den Aufbau des Dämpfers nach dem deutschen Gebrauchsmuster 201 17 031.0 der gleichen Anmelderin entspricht, wobei die Drosselbohrung 28 für die Luft nicht in der Deckwandung des Kolbens und in der Kappe, sondern entsprechend der vorliegenden Erfindung im Zylindermantel des äußeren Zylinders 12 vorgesehen ist. Wie in Figur 9 dargestellt, ist der Kolben 14 in einem Zwischenzylinder 13 geführt, der wiederum gegenüber dem Zylinder 12 teleskopierbar ist. Ein Zurückführen des Kolbens 14 mit Stößel 18 erfolgt über eine Druckfeder 38, die in Figur 9 in ausgefahrener Stellung und in Figur 10 in zusammengedrückter Stellung gezeigt ist. Der Stößel 18 weist auch in dieser Ausführungsvariante, wie aus Figur 11 ersichtlich einen kreuzförmigen Querschnitt auf. Die Länge der Stege 20 und 22 des Stößels 18 ist geringer als der Durchmesser des Kolbens 14, so dass dieser in seiner Ausgangslage gegenüber einem stimseitigen Bund 40 des beweglichen Zwischenzylinders 13 anliegt. Der bewegliche Zwischenzylinder 13 weist 4 radial vorspringende Stege 42 auf, die seiner Führung im Zylinder 12 dienen. Zur Führung sind im Zylinder 12 Stifte 44 eingelassen, wie dies in Figur 11 gezeigt ist. Diese Stifte 44 verhindern ein Verdrehen des Zwischenzylinders 13 innerhalb des Zylinders 12 aufgrund der an diesem Zwischenzylinder angeformten vorspringenden Stege 42. Der verschiebliche Zwischenzylinder 13 ist weiterhin mit einem flanschförmigen Rand 46 versehen, der sich in Ausgangslage gegen die in entsprechende Bohrungen des Zylinders 12 eingesetzten Stifte 44 abstützt, wie dies in Figur 9 gezeigt ist. Der Kolben 14 ist mit einer Dichtung 16' und der bewegliche Zwischenzylinder 13 ist mit einer Dichtung 48 versehen. Im Mantel des Zylinders 12 ist die Bohrung 28 angeordnet. Die Feder 38 ist zwischen dem Boden des Zylinders 12 und dem Kolben 14 angeordnet. In Figur 12 ist der Kolben 14 mit Stößel 18 vereinzelt dargestellt. In Figur 13 ist der bewegliche Zwischenzylinder 13 mit Flansch 46 und Dichtung 48 dargestellt und in Figur 14 ist der Zylinder 12 mit der Bohrung 28 und den beiden Aufnahmebohrungen für die Stifte 44 gezeigt.

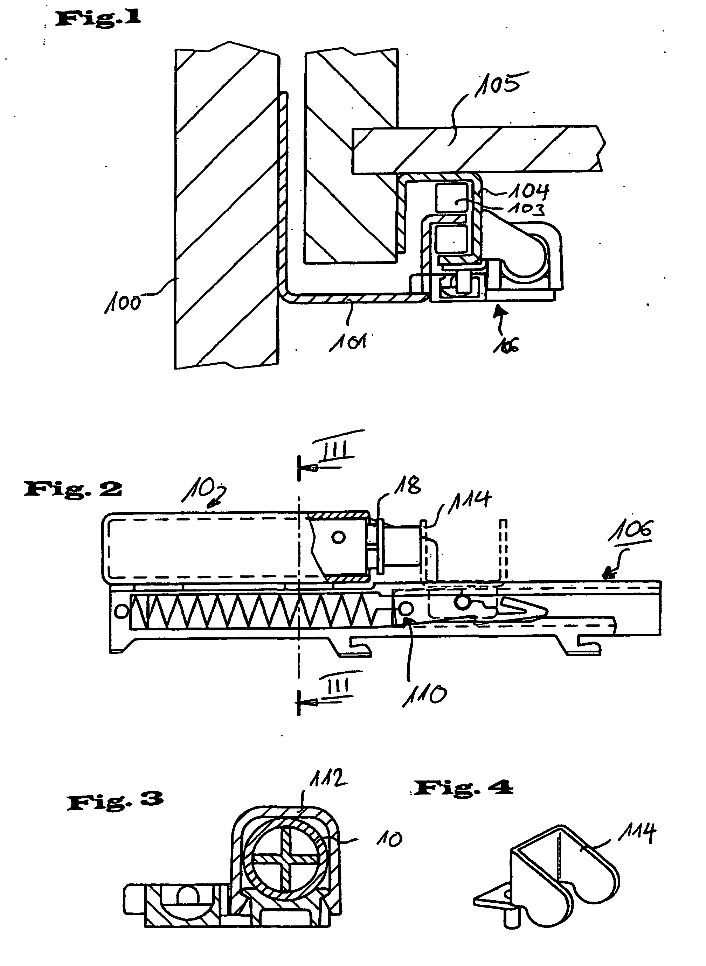

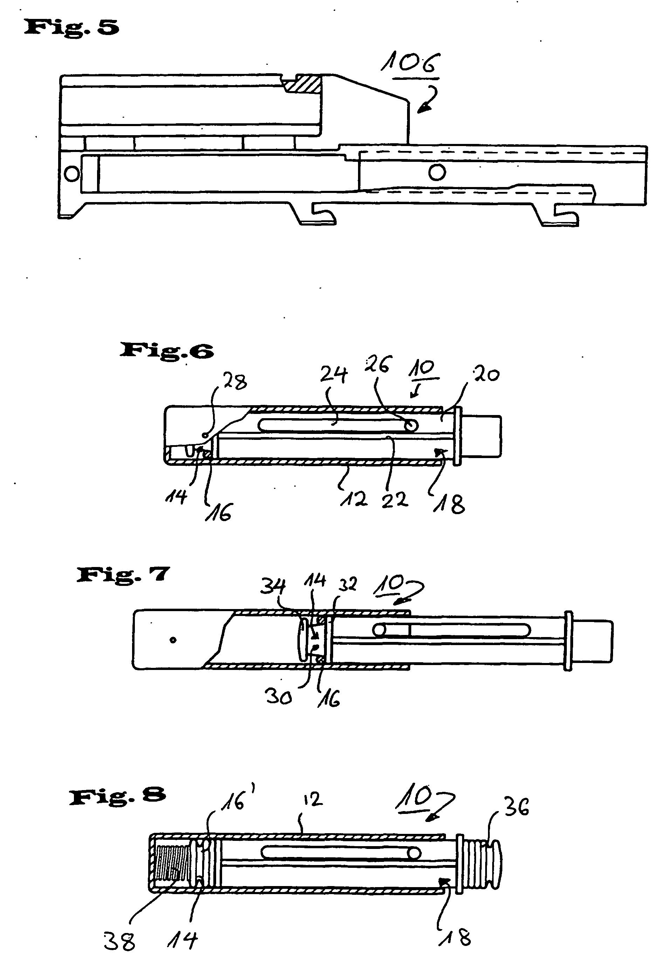

Die anhand der Figuren 6 bis 14 erläuterten Luftdämpfer können zur Dämpfung von Möbelteilen, beispielsweise Schubladen, die in Schubladenführungen gelagert sind, dienen. Ein Anwendungsfall ist anhand der Figuren 1 bis 5 dargestellt. Dieser Anwendungsfall entspricht demjenigen der europäischen Patentanmeldung 11 11 420.4 des gleichen Anmelders. Die dort dargestellte Variante beinhaltete einen Hydraulikdämpfer. Dieser ist im hier dargestellten Ausführungsbeispiel, wie anhand der Figuren 2 und 3 ersichtlich, durch einen Luftdämpfer gemäß einem der vorliegenden Ausführungsbeispiele ersetzt.

Das Einbaubeispiel für einen Luftdämpfer 10 wird im folgenden kurz erläutert, wobei hinsichtlich der ausführlichen Beschreibung dieses Einbauzustandes auf die europäische Patentanmeldung mit der Anmeldenummer 01 111 420.4 verwiesen wird. In Figur 1 ist eine Möbelkorpuswand 100 dargestellt, an welche eine Führungsschiene 101 geschraubt ist. Auf dieser Führungsschiene ist eine ausziehbare Schiene 104 über Rollen bzw. Kugellager 103 ausziehbar geführt, wobei die ausziehbare Führungsschiene 104 fest mit einer Schublade 105 verbunden ist. Mit der korpusseitigen Führungsschiene 101 ist eine Baueinheit 106 verbunden, in welcher einerseits der Luftdämpfer 10 sowie andererseits eine federbelastete Schubladeneinzugsautomatik 110 angeordnet ist. Die Funktionsweise dieser Einzugsautomatik ist ausführlich in der EP 01 111 420.4 beschrieben, auf die hier Bezug genommen wird. Am Ende des federbelasteten Einzugs der Schublade wird der Einzugsstoß der Schublade 105 gegenüber dem Korpus 100 durch den Luftdämpfer 10 gedämpft. In der Schnittdarstellung III - III gemäß Figur 2, die in Figur 3 dargestellt ist, ist der Aufbau des Luftdämpfers gezeigt, der hier in einer kastenartigen Aufnahme 112 gelagert ist. Der Stößel 18 stößt beim Einzug der beweglichen Schublade an einen Anschlag 114, der in Figur 4 in perspektivischer Darstellung nochmals wiedergegeben ist. Die Figur 5 zeigt das Gehäuse der Baueinheit 106 ohne die Einzugsautomatik 110 bzw. den Luftdämpfer 10.

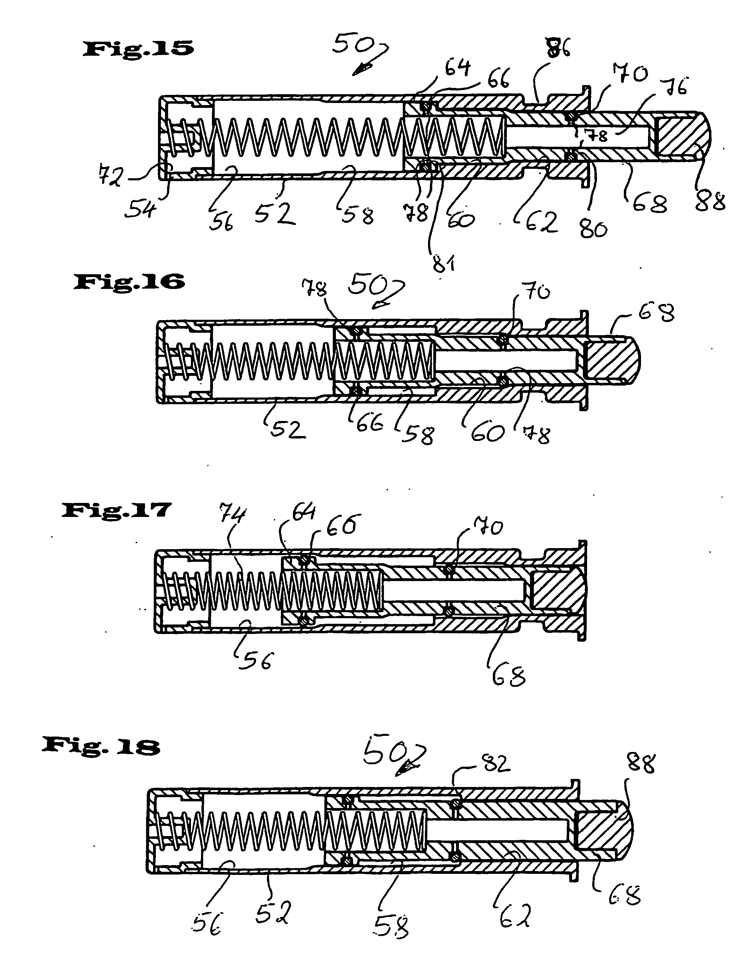

Ein Luftdämpfer 50 ist nach der Ausführungsvariante, die in den Figuren 15, 16, und 17 dargestellt ist im wesentlichen aus einem Zylinder 52 gebildet, der einseitig mit einem Deckel 54 verschlossen ist. Die Innenwandung der Mantelwand des Zylinders 52 ist in vier Abschnitte 56, 58, 60 und 62 mit unterschiedlichen Durchmessem (vgl. die Figuren 15, 16 und 17) unterteilt. Ein Kolben 64 weist eine Dichtung 66 auf. Mit dem Kolben 64 ist einstückig ein Stößel 68 verbunden, der etwa in seiner Mitte eine weitere Dichtung 70 trägt. In der ausgezogenen Stellung, die in Figur 15 dargestellt ist, befinden sich die Dichtungen 66 und 70 in den Abschnitten 58 und 62 der Mantelwandung des Zylinders 52. Die Dichtungen liegen in dieser Stellung dichtend an, wobei sie ihre Dichtwirkung insbesondere dann entfalten, wenn ein Möbelteil gegen den Stößel 68 drückt, sodass die Luft nur durch die entsprechende Bohrung 72 entweichen kann.

Wird der Stößel 68 in die aus Figur 16 ersichtliche Stellung eingedrückt, so tritt die Dichtung 70 in den zylindrischen Abschnitt 60, der einen größeren Durchmesser aufweist als der Umfang der Dichtung 70, sodass die Dichtung 70 unwirksam wird und im Ergebnis die Bremskraft des gesamten Luftdämpfers 50 verringert wird. Dennoch ist in dieser Stellung die Dichtung 66 wirksam, da sie noch im Abschnitt 58 des Rohres 62 anliegt. In der eingedrückten Stellung gemäß Figur 17 ist allerdings auch die Dichtung 60 in einen anderen Abschnitt, nämlich den Abschnitt 56 mit größerem Durchmesser als dem Durchmesser des Dichtrings 60 eingerückt. Dadurch ist die gesamte Dichtwirkung beider Dichtungen, nämlich der Dichtung 66 und der Dichtung 70 aufgehoben. Somit wird nur noch über die Feder 74 dem Kolben 64 bzw. dem Stößel 68 eine Gegenkraft aufgeprägt. Die die notwendige Schließkraft eines Möbelteils aufbringende Einrichtung ist somit in dieser Stellung gemäß Figur 17 am wirkungsvollsten einsetzbar, da hier ja der Schließkraft die geringste Kraft entgegengesetzt wird.

In der hier dargestellten Ausführungsvariante gemäß den Figuren 15 bis 17 kann der Stößel 68 einen Hohlraum 76 aufweisen, der über Kanäle 78 mit Nuten 80, 81 für die Dichtungen 70 bzw. 66 verbunden ist.

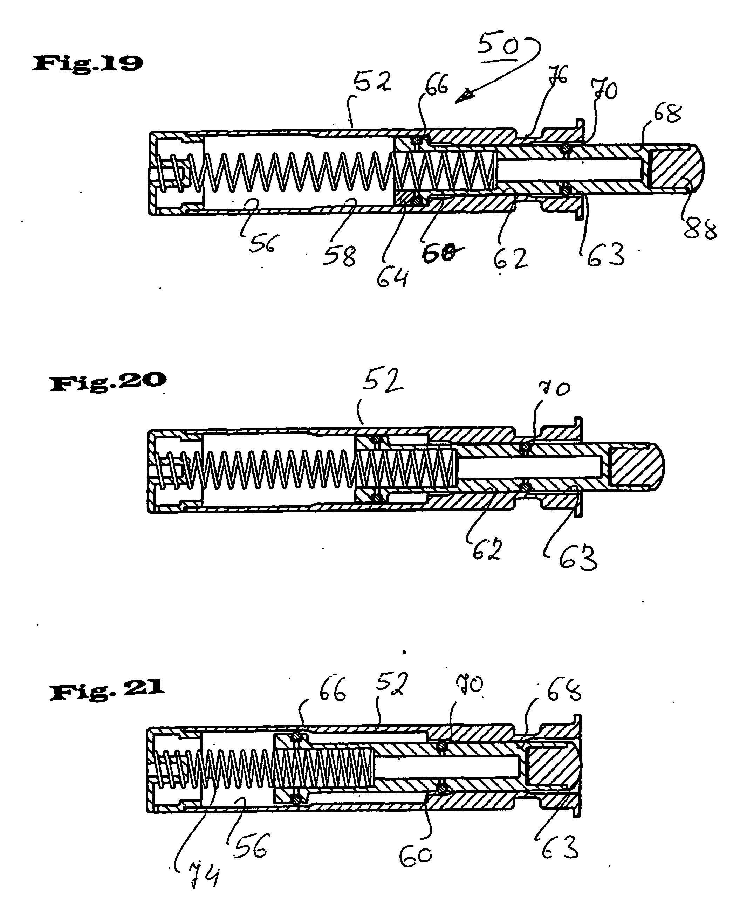

In der Figur 18 ist eine vereinfachte Ausführungsform eines Luftdämpfers 50 dargestellt, bei der die Mantelwandug des Zylinders 52 lediglich Abschnitte 56, 58 und 62 aufweist. Der Zwischenabschnitt 60 ist in dieser Ausführungsvariante nicht gezeigt. Auch der Stößel 68 weist nicht zwei Bereiche unterschiedlichen Durchmessers auf, sondern dieser weist hier nur einen über seine gesamte Länge verlaufenden Durchmesser auf. In dieser Ausführungsform übernimmt also der Abschnitt 58 die Funktion des Abschnittes 58 und des Zwischenabschnittes 60 gemäß der vorher beschriebenen Ausführungsvariante gemäß der Figuren 15 bis 17. Der Hub des Kolbens 68 ist, wie auch in der vorherigen Variante über einen unstetigen Übergang in Form einer Stufe oder eines Sockels 82 begrenzt.

In den Figuren 19 bis 21 ist ein weiteres alternatives Ausführungsbeispiel gezeigt, wobei hier die Mantelwandung des Zylinders 52 eines Luftdämpfers 50 in fünf Abschnitte unterteilt ist, nämlich die Abschnitte 56, 58, 60, 62 und 63. Ansonsten ist der Luftdämpfer 50 in gleicher Weise ausgebildet, wie in dem Ausführungsbeispiel gemäß der Figuren 15 bis 17. Anschließend an den Abschnitt mit geringerem Durchmesser, an den also die zweite Dichtung 70 dichtend anliegt (vgl. Figur 20), ist nach außen anschließend ein Abschnitt 63 mit einem vergleichsweise größerem Durchmesser angeordnet. Der Durchmesser des Abschnitts 63 entspricht jenem des Abschnitts 60. Damit wird also in der ersten Phase des Eindrücken des Stößels 68, wie sie in Figur 19 gezeigt ist, nur die Dichtung 66 im Bereich des Kolben 64 wirksam, nicht jedoch die Dichtung 70 im Bereich des Stößels 68, da diese innerhalb des Abschnitts 63 im Zylinder 52 nicht dichtend an der Mantelwandung des Zylinders 52 anliegt. Während des Einschiebens, wie es in Figur 20 dargestellt ist, kommt dann allerdings die Dichtung 70 in eine dichtende Anlage innerhalb des Abschnitts 62, sodass hier die Dämpfungswirkung aufgrund der besseren Dichtwirkung verstärkt wird.

In Figur 21 tritt nun die Dichtung 70 beim weiteren Eindrücken des Stößels 68 in den Abschnitt 60 ein, der im Durchmesser dem Abschnitt 63 entspricht. Hier ist wiederum die Dichtwirkung der Dichtung 70 aufgehoben. Gleichzeitig ist aber auch die Dichtung 66 in den Abschnitt 56 des Zylinders 52 bewegt, sodass auch hier die Dichtung 66 nicht mehr an der Mantelwandung anliegt. In dieser Stellung wird die den Stößel 68 beaufschlagende Gegenkraft also nur noch durch die Feder 74 erzeugt. Weitere aus den Figuren leicht entnehmbare Merkmale wie beipielsweise eine Nut 86 (vgl Figur 15 bzw. Figur 19) zur Befestigung des Zylinders 52 an einen Träger oder die Anordnung eines Puffers 88 am freien Ende des Stößels 68, sind an sich bekannt und werden hier nicht näher beschrieben.

## Patentansprüche

1. Luftdämpfer (10) für bewegliche Möbelteile, wie beispielsweise Schubladen oder Türen, bestehend aus einem einseitig offenen Zylinder (12) und einem in diesem längsverschieblich aufgenommenen Kolben (14) mit Dichtung (16), an den ein Stößel (18) anschließt,
**gekennzeichnet durch**
eine in der Mantelwand des Zylinders nahe dem geschlossenen Endbereich des Zylinders angeordnete Bohrung (28) zum Entweichen von kompimierter Luft, deren Durchmesser gegenüber dem Zylinderdurchmesser wesentlich kleiner ist.

2. Luftdämpfer nach Anspruch 1, **dadurch gekennzeichnet, daß** die Bohrung einen Durchmesser aufweist, der 2,5 % bis 4 %, vorzugsweise 3,3 %, des Durchmessers des Zylinders aufweist.

3. Luftdämpfer nach Anspruch 1 oder Anspruch 2, **dadurch gekennzeichnet, daß** der Kolben nach Einschieben in den Zylinder durch eine Rückstelleinrichtung in seine ausgeschobene Stellung zurückstellbar ist.

4. Luftdämpfer nach Anspruch 3, **dadurch gekennzeichnet, daß** die Rückstelleinrichtung eine Feder oder ein Magnet ist.

5. Luftdämpfer nach einem der Ansprüche 1 bis 4, **dadurch gekennzeichnet, daß** der Zylinder ein mindestens zweistufiger Teleskopzylinder ist.

6. Luftdämpfer nach einem der Ansprüche 1 bis 5, **dadurch gekennzeichnet, daß** am freien Ende des Stößels ein Puffer angeordnet ist.

7. Luftdämpfer nach einem der Ansprüche 1 bis 6, **dadurch gekennzeichnet, daß** der Stößel aus zwei sich kreuzenden Stegen besteht.

8. Luftdämpfer nach Anspruch 7, **dadurch gekennzeichnet, daß** in einem der Stege des Stößels ein Langloch ausgebildet ist, durch welches ein ortsfest im Zylinder angeordneter Stift greift.

9. Luftdämpfer nach Anspruch 5, **dadurch gekennzeichnet, daß** der bewegliche Zylinder des Teleskopzylinders auf Umfang mindestens zwei radial vorspringende Stege aufweist, die zu seiner Führung im feststehenden Zylinder entlang mindestens eines zylinderfesten Stiftes dienen.

10. Luftdämpfer nach einem der Ansprüche 1 bis 9, **dadurch gekennzeichnet, daß** der Kolben eine zu seinem Ende hin konisch auslaufende Nut aufweist, in der eine O-Ringdichtung lose gelagert ist, so daß sie in Einschubrichtung des Kolbens dichtend anliegt und in Ausschubrichtung lose gelagert ist.

11. Luftdämpfer nach einem der Ansprüche 1 bis 10, **dadurch gekennzeichnet, daß** die Mantelwand des Zylinders mindestens zwei Abschnitte unterschiedlichen Innendurchmessers aufweist und daß der sich an den Kolben anschließende Stößel mindestens einen Abschnitt aufweist, dessen Durchmesser an den Innendurchmesser eines Abschnitts des Zylinders angepaßt ist und daß der Stößel eine zweite Dichtung zur Abdichtung gegenüber der Mantelwand des Zylinders aufweist.

12. Luftdämpfer nach Anspruch 11, **dadurch gekennzeichnet, daß** die Mantelwand des Zylinders einen ersten Abschnitt aufweist, der einen größeren Durchmesser aufweist als den Durchmesser des Kolbens mit Dichtung, daß die Mantelwand des Zylinder einen zweiten Abschnitt aufweist, dessen Durchmesser so gewählt ist, daß der Kolben mit Dichtung dichtend anliegt, während der Stößel mit seiner Dichtung einen vergleichsweise kleineren Durchmesser aufweist, und daß die Mantelwand des Zylinders einen dritten Abschnitt mit einem derartigen Durchmesser aufweist, daß der Stößel mit seiner Dichtung dichtend anliegt.

13. Luftdämpfer nach Anspruch 12, **dadurch gekennzeichnet, daß** zwischen dem zweiten und dem dritten Abschnitt der Mantelwand des Zylinders ein Zwischenabschnitt mit einem Durchmesser angeordnet ist, an den der Durchmesser eines ersten Abschnitts des Stößels angepaßt ist, während dieser Durchmesser des Zwischenabschnitts größer ist als der Durchmesser der auf einem zweiten Abschnitt des Stößels sitzenden Dichtung.

14. Luftdämpfer nach Anspruch 12, **dadurch gekennzeichnet, daß** zwischen dem zweiten und dem dritten Abschnitt der Mantelwand des Zylinders und nach außen an den dritten Abschnitt anschließend jeweils weitere Abschnitte mit einem Durchmesser angeordnet sind, die so gewählt sind, daß er größer ist als der Durchmesser der auf dem Stößel sitzenden Dichtung.

15. Luftdämpfer nach Anspruch 14, **dadurch gekennzeichnet, daß** die Durchmesser der zusätzlichen Abschnitte der Mantelwand des Zylinders gleich groß sind.

## Claims

1. Air damper (10) for movable furniture parts, such as drawers or doors, for example, consisting of a cylinder (12) which is open on one side and of a piston (14) with seal (16) which is accommodated in this cylinder in a longitudinally displaceable manner and which is adjoined by a ram (18), **characterized by** a drilled hole (28) to allow compressed air to escape, this drilled hole being arranged in the outer wall of the cylinder close to the closed end region of the cylinder and having a diameter which is substantially smaller than the diameter of the cylinder.

2. Air damper according to Claim 1, **characterized in that** the drilled hole has a diameter which is 2.5% to 4%, preferably 3.3%, of the diameter of the cylinder.

3. Air damper according to Claim 1 or 2, **characterized in that** the piston can be moved back into its extended position by a return device after it has been inserted into the cylinder.

4. Air damper according to Claim 3, **characterized in that** the return device is a spring or a magnet.

5. Air damper according to one of Claims 1 to 4, **characterized in that** the cylinder is a telescopic cylinder with at least two stages.

6. Air damper according to one of Claims 1 to 5, **characterized in that** a buffer is arranged at the free end of the ram.

7. Air damper according to one of Claims 1 to 6, **characterized in that** the ram consists of two crosspieces.

8. Air damper according to Claim 7, **characterized in that** a longitudinal slot is formed in one of the crosspieces of the ram, through which slot engages a pin which is arranged in a fixed position in the cylinder.

9. Air damper according to Claim 5, **characterized in that** the movable cylinder of the telescopic cylinder has at least two radially projecting ribs on its circumference which are used to guide it in the fixed cylinder along at least one cylinder-bound pin.

10. Air damper according to one of Claims 1 to 9, **characterized in that** the piston has a groove which tapers conically towards its end and in which an O-ring seal is loosely mounted so that it bears in a sealing manner in the direction in which the piston is pushed in and is mounted loosely in the direction in which the piston is pushed out.

11. Air damper according to one of Claims 1 to 10, **characterized in that** the outer wall of the cylinder has at least two sections of different internal diameter, and **in that** the ram joining the piston has at least one section whose diameter is matched to the internal diameter of a section of the cylinder, and **in that** the ram has a second seal to provide sealing with respect to the outer wall of the cylinder.

12. Air damper according to Claim 11, **characterized in that** the outer wall of the cylinder has a first section which has a larger diameter than the diameter of the piston with its seal, **in that** the outer wall of the cylinder has a second section whose diameter is chosen so that the piston bears in a sealing manner with its seal, whereas the ram with its seal has a comparatively smaller diameter, and **in that** the outer wall of the cylinder has a third section with a diameter such that the ram bears in a sealing manner with its seal.

13. Air damper according to Claim 12, **characterized in that** between the second and the third section of the outer wall of the cylinder there is arranged an intermediate section having a diameter to which the diameter of a first section of the ram is matched, whereas this diameter of the intermediate section is larger than the diameter of the seal seated on a second section of the ram.

14. Air damper according to Claim 12, **characterized in that** between the second and the third section of the outer wall of the cylinder and outwardly adjoining the third section there are in each case arranged further sections having a diameter which is chosen so that it is larger than the diameter of the seal seated on the ram.

15. Air damper according to Claim 14, **characterized in that** the diameters of the additional sections of the outer wall of the cylinder are identical.

## Revendications

1. Amortisseur à air (10) pour éléments de meubles mobiles, comme par exemple des tiroirs ou des portes, se composant d'un cylindre (12) ouvert d'un côté et d'un piston (14) reçu dans celui-ci de manière à pouvoir coulisser en longueur, avec un joint d'étanchéité (16), auquel se raccorde une tige poussoir (18),
**caractérisé par**
un alésage (28) disposé dans la paroi d'enveloppe du cylindre à proximité de la région d'extrémité fermée du cylindre, pour faire s'échapper de l'air comprimé, dont le diamètre est beaucoup plus petit que le diamètre du cylindre.

2. Amortisseur à air selon la revendication 1, **caractérisé en ce que** l'alésage présente un diamètre qui correspond à 2,5 % à 4 %, de préférence à 3,3 % du diamètre du cylindre.

3. Amortisseur à air selon la revendication 1 ou 2, **caractérisé en ce que** le piston, après son insertion dans le cylindre, peut être ramené par un dispositif de rappel dans sa position ressortie.

4. Amortisseur à air selon la revendication 3, **caractérisé en ce que** le dispositif de rappel est un ressort ou un aimant.

5. Amortisseur à air selon l'une quelconque des revendications 1 à 4, **caractérisé en ce que** le cylindre est un cylindre télescopique à au moins deux étages.

6. Amortisseur à air selon l'une quelconque des revendications 1 à 5, **caractérisé en ce que** l'on dispose un tampon à l'extrémité libre de la tige poussoir.

7. Amortisseur à air selon l'une quelconque des revendications 1 à 6, **caractérisé en ce que** la tige poussoir se compose de deux nervures se croisant.

8. Amortisseur à air selon la revendication 7, **caractérisé en ce qu'**un trou oblong est réalisé dans l'une des nervures de la tige poussoir, à travers lequel vient en prise une tige disposée fixement dans le cylindre.

9. Amortisseur à air selon la revendication 5, **caractérisé en ce que** le cylindre mobile du cylindre télescopique présente sur sa périphérie au moins deux nervures saillant radialement, qui servent à son guidage dans le cylindre fixe le long d'au moins une tige fixée au cylindre.

10. Amortisseur à air selon l'une quelconque des revendications 1 à 9, **caractérisé en ce que** le piston présente une rainure se prolongeant coniquement vers son extrémité, dans laquelle est monté lâchement un joint d'étanchéité torique, de sorte qu'il s'applique hermétiquement dans la direction d'enfoncement du piston et qu'il soit monté lâchement dans la direction de sortie.

11. Amortisseur à air selon l'une quelconque des revendications 1 à 10, **caractérisé en ce que** la paroi d'enveloppe du cylindre présente au moins deux portions de diamètre interne différent et **en ce que** la tige poussoir se raccordant au piston présente au moins une portion dont le diamètre est adapté au diamètre intérieur d'une portion du cylindre et **en ce que** la tige poussoir présente un deuxième joint d'étanchéité pour réaliser l'étanchéité par rapport à la paroi d'enveloppe du cylindre.

12. Amortisseur à air selon la revendication 11, **caractérisé en ce que** la paroi d'enveloppe du cylindre présente une première portion de plus grand diamètre que le diamètre du piston avec le joint d'étanchéité, **en ce que** la paroi d'enveloppe du cylindre présente une deuxième portion, dont le diamètre est choisi de telle sorte que le piston s'applique avec le joint d'étanchéité de manière hermétique, tandis que la tige poussoir avec son joint d'étanchéité présente un diamètre relativement plus petit et **en ce que** la paroi d'enveloppe du cylindre présente une troisième portion avec un diamètre tel que la tige poussoir s'applique hermétiquement avec son joint d'étanchéité.

13. Amortisseur à air selon la revendication 12, **caractérisé en ce que** l'on prévoit entre la deuxième et la troisième portion de la paroi d'enveloppe du cylindre une portion intermédiaire avec un diamètre auquel le diamètre d'une première portion de la tige poussoir est adaptée, tandis que ce diamètre de la portion intermédiaire est plus grand que le diamètre du joint d'étanchéité reposant sur une deuxième portion de la tige poussoir.

14. Amortisseur à air selon la revendication 12, **caractérisé en ce que** l'on dispose entre la deuxième et la troisième portion de la paroi d'enveloppe du cylindre, à chaque fois d'autres portions se raccordant vers l'extérieur à la troisième portion, avec un diamètre choisi de telle sorte qu'il soit plus grand que le diamètre du joint d'étanchéité reposant sur la tige poussoir.

15. Amortisseur à air selon la revendication 14, **caractérisé en ce que** les diamètres des portions supplémentaires de la paroi d'enveloppe du cylindre sont identiques.
